# EUROPEAN PATENT APPLICATION

(11) **EP 4 086 224 A1**
(43) Date of publication of application: **09.11.2022**
(21) Application number: 21172664.1
(22) Date of filing: 07.05.2021
(51) Int. Cl.: C01B 21/20, C01B 32/50, H05H 1/48, B01J 19/08, H05H 1/42

(54) **PLASMA REACTOR FOR PLASMA-BASED GAS CONVERSION COMPRISING AN EFFUSION NOZZLE**

(71) Applicant: Universiteit Antwerpen, 2000 Antwerpen (BE)
(72) Inventor: CREEL, James, Conroe, TX 77385 (US); ESHTEHARDI, Hamid, B-2610 Antwerp (BE); BOGAERTS, Annemie, B-2160 Wommelgem (BE)
(74) Representative: IPLodge bv

(57) **Abstract**

The present disclosure relates to a plasma reactor for plasma-based gas conversion comprising a plasma chamber and an effusion nozzle coupled to the plasma chamber. The plasma chamber comprises one or more gas inlets configured for introducing a feed gas into the plasma chamber and at least one gas outlet opening for evacuating converted and unconverted feed gas from the plasma chamber. The effusion nozzle comprises a gas-receiving cavity elongating along a central axis from a first end to a second end and configured for receiving a gas flow of converted and unconverted feed gas exiting the at least one gas outlet of the plasma chamber. The gas-receiving cavity comprises an axial entrance opening at the first end for receiving the gas flow and an axial blocking member at the second end configured for blocking the gas flow of converted and unconverted feed gas and for forcing the converted and unconverted feed gas to recirculate within the gas-receiving cavity. The effusion nozzle further comprises one or more effusion openings for evacuating converted and unconverted feed gas from the gas-receiving cavity.

## Description

### Field of the disclosure

The present disclosure relates to a plasma reactor for plasma-based gas conversion comprising a plasma chamber wherein, when in operation, a plasma is formed. The plasma chamber comprises one or more gas inlets for introducing a feed gas into the plasma chamber and at least one gas outlet opening for evacuating converted and unconverted feed gas from the plasma chamber.

### Background

Plasma reactors for plasma-based gas conversion are gaining an increased interest for a variety of chemical reaction applications.

A first example of the potential benefit of using plasma reactors is for the conversion of carbon dioxide and methane into value added chemicals or renewable fuels.

A second example of growing interest in using plasma reactors is for the conversion of N₂ and O₂ from air into reactive NO and NO₂, generally named NOₓ.

A plasma reactor for NOₓ production is for example disclosed by Jardali et al. in Green Chem, 2021, 23, 1748-1757. Jardali et al. proposes to use the NOₓ molecules for the production of high yield nitrogen content organic fertilizers. Indeed, by mixing NO₂ with livestock manure, a nitrate is formed that stabilizes the ammonium and hence minimizes or eliminates NH₃ losses. On the other hand, present fertilizers are mainly produced from non-sustainable fossil fuels via the Haber-Bosch process which leads to serious environmental problems, involving for example, large carbon dioxide production. Hence, production of fertilizers based on the plasma technology can be an environmentally friendly alternative or a complementary solution to the present fertilizers production methods.

Different types of plasma reactors exist for the purpose of plasma-assisted gas conversion. Plasma reactors can differ in design, geometry, and/or mode of operation, depending on the particular application for which the plasma reactor is used.

An example of a plasma reactor for NOₓ production is a rotating gliding arc (RGA) reactor, as discussed by Jardali et al. The RGA reactor comprises a plasma chamber wherein a plasma is to be formed and one or more gas inlets for supplying the feed gas into the plasma chamber. In this example the feed gas is N₂ and O₂. The feed gas is introduced in the plasma chamber of the RGA reactor as a swirling flow about a central axis of the reactor. The RGA reactor further has a cathode in the form of a spark plug (with ground electrode removed), an anode having a conical portion, and a cylindrical outlet portion for evacuating the converted gases (NOₓ) and non-converted gases (N₂ and O₂). By applying a high-voltage between the first and second electrode, a gliding arc discharge is generated in the plasma chamber.

Although the results of Jardali et al. show to be promising for NOₓ production, in order for the plasma reactor technology to become commercially attractive for large scale applications, further improvements are still desirable. What is important is to obtain a high production yield of NOₓ with a low energy consumption. The energy consumption is also named energy cost and is generally expressed in Joules per mol of feed gas.

Similarly, if plasma reactor technology is to be commercially deployed for other plasma-based gas conversion applications, such as CO₂ or CH₄ conversion, increasing production yield and minimizing the energy cost is vital.

Hence there is room for improving plasma reactors for gas conversion.

### Summary

It is an object of the present disclosure to provide a plasma reactor for plasma-based gas conversion wherein the production yield is increased and/or energy cost is reduced when compared to prior art arc plasma reactors.

The present invention is defined in the appended independent claims. The dependent claims define advantageous embodiments.

According to a first aspect of the present disclosure, a plasma reactor for plasma-based gas conversion is provided. The plasma reactor comprises a plasma chamber having one or more gas inlets configured for introducing a feed gas into the plasma chamber and at least one gas outlet opening for evacuating converted and unconverted feed gas from the plasma chamber. A central axis of the plasma reactor is passing through the at least one gas outlet opening of the plasma chamber.

The plasma reactor according to the present disclosure is characterized in that it comprises an effusion nozzle coupled to the plasma chamber. The effusion nozzle comprises a gas-receiving cavity elongating along the central axis from a first end to a second end and is configured for receiving a gas flow of converted and unconverted feed gas exiting the at least one gas outlet opening of the plasma chamber.

The gas-receiving cavity comprises an axial entrance opening at the first end of the gas-receiving cavity for receiving the gas flow of converted and unconverted feed gas, and an axial blocking member at the second end of the gas-receiving cavity. The axial blocking member is configured for blocking the gas flow of converted and unconverted feed gas and for forcing the converted and unconverted feed gas to recirculate within the gas-receiving cavity.

The effusion nozzle further comprises one or more effusion openings configured for evacuating converted and unconverted feed gas from the gas-receiving cavity.

Advantageously, by providing an effusion nozzle comprising an axial blocking member for blocking the flow of converted and unconverted gas flowing out of the reactor chamber and forcing the gas to recirculate, the residence time of the gas in the plasma reactor is increased. An increased residence time is positively influencing gas production yields.

Advantageously, by providing an effusion nozzle comprising an axial blocking member forcing the gas to recirculate, thermal conversion is enhanced, increasing the temperature of the walls of the effusion nozzle and/or plasma chamber, which positively influences gas conversion production yields.

In embodiments, the axial blocking member comprises an axial blind flange or an axial wall.

In embodiments, the axial blocking member comprises a protruding element protruding inside the gas-receiving cavity in a direction parallel with the central axis. This element can take a number of different shapes such as any of the following non-limiting list of shapes: a cone, a cylinder, a hemisphere, a cuboid, a frustum, a pyramid, a prism, a cross, a helix shape, or any combination thereof.

In embodiments, the effusion openings are, for example, effusion holes or effusion slits.

In embodiments, the plasma reactor according to the present disclosure is any of: a 2D gliding arc plasma reactor, a rotating gliding arc plasma reactor, a dual vortex plasmatron, a gliding arc plasmatron, a microwave plasma reactor or an atmospheric pressure glow discharge plasma reactor.

In embodiments, the plasma reactor is a rotating gliding arc plasma reactor operable in a rotating arc mode and operable in a steady arc mode.

In embodiments, the plasma reactor according to the present disclosure is a plasma reactor operable in a pressure range in the plasma chamber between 1 mbar and 5 bar, preferably between 100 mbar and 5 bar, more preferably between 500 mbar and 2 bar.

In embodiments, the effusion nozzle is made of an electrically conducting material and the effusion nozzle is electrically coupled to an electrode of the plasma reactor.

In embodiments, the plasma reactor comprises of a first electrode and a second electrode electrically insulated from the first electrode. In embodiments, the effusion nozzle is made of an electrically conducting material and the effusion nozzle is electrically coupled to the second electrode so as to form an extension of the second electrode; preferably, the first electrode is high-voltage cathode electrode and the second electrode is a grounded anode electrode.

According to a second aspect of the present disclosure, the plasma reactor of the present disclosure is used for conversion of N₂ and O₂ molecules into NO and NO₂ molecules, or for conversion of CO₂ molecules into value added chemicals or renewable fuels.

### Short description of the drawings

These and further aspects of the present disclosure will be explained in greater detail by way of example and with reference to the accompanying drawings in which:
- Fig.1: schematically illustrates parts of a plasma reactor according to the present disclosure,
- Fig.2a to Fig.2f: represent cross-sectional views of examples of embodiments of effusion nozzles according to the present disclosure.
- Fig.3: illustrates a section view of a first example of an embodiment of a threaded effusion nozzle,
- Fig.4: illustrates a section view of a second example of an embodiment of a threaded effusion nozzle,
- Fig.5: illustrates a section view of a third example of an embodiment of a threaded effusion nozzle,
- Fig.6a: represents a section view of an embodiment of an effusion nozzle according to the present disclosure, illustrating radially distributed effusion openings through a radial circumferential wall of the effusion nozzle,
- Fig.6b: represents a section view of a further embodiment of an effusion nozzle according to the present disclosure, illustrating tangential effusion openings through a radial circumferential wall of the effusion nozzle,
- Fig.7a and Fig.7b: are illustrating respectively an outer side and an inner side of an embodiment of an effusion nozzle according to the present disclosure wherein radially distributed effusion openings are made through the axial blocking member,
- Fig.8: schematically illustrates an example of an embodiment of a 2D gliding arc plasma reactor comprising an effusion nozzle,
- Fig.9: schematically illustrates a cross-sectional view of an example of an embodiment of a rotating gliding arc plasma reactor according to the present disclosure,
- Fig.10: schematically illustrates a cross-sectional view of a further example of an embodiment of a rotating gliding arc plasma reactor according to the present disclosure,
- Fig.11: shows an isometric view of an embodiment of a rotating gliding arc plasma reactor according to the present disclosure,
- Fig.12: shows an isometric view of a portion of the effusion nozzle of the gliding arc plasma reactor shown on Fig.11,
- Fig.13: is a cross-sectional view schematically illustrating an example of an embodiment of a 3D gliding arc plasmatron comprising an effusion nozzle,
- Fig.14: is a cross-sectional view schematically illustrating a dual vortex plasmatron comprising an effusion nozzle,
- Fig.15: is a cross-sectional view schematically illustrating a microwave plasma reactor comprising an effusion nozzle according to the present disclosure,
- Fig.16: is a cross-sectional view schematically illustrating an atmospheric pressure glow discharge reactor comprising an effusion nozzle according to the present disclosure,
- Fig.17: illustrates NOₓconcentrations as function of N₂/O₂ ratios obtained with an RGA plasma reactor with and without effusion nozzle,
- Fig.18: illustrates the energy cost as function of N₂/O₂ ratios obtained with an RGA plasma reactor with and without effusion nozzle.

The drawings of the figures are neither drawn to scale nor proportioned. Generally, identical components are denoted by the same reference numerals in the figures.

### Detailed description of embodiments

The present disclosure will be described in terms of specific embodiments, which are illustrative of the disclosure and not to be construed as limiting. It will be appreciated by persons skilled in the art that the present disclosure is not limited by what has been particularly shown and/or described and that alternatives or modified embodiments could be developed in the light of the overall teaching of this disclosure. The drawings described are only schematic and are non-limiting.

Use of the verb "to comprise", as well as the respective conjugations, does not exclude the presence of elements other than those stated. Use of the article "a", "an" or "the" preceding an element does not exclude the presence of a plurality of such elements.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the disclosure described herein are capable of operation in other sequences than described or illustrated herein.

Reference throughout this specification to "one embodiment" or "an embodiment" means that a particular feature, structure or characteristic described in connection with the embodiments is included in one or more embodiment of the present disclosure. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one ordinary skill in the art from this disclosure, in one or more embodiments.

### Plasma reactor with effusion nozzle, general

Various types of plasma reactors for performing plasma-based gas conversion exist in the art and the present disclosure is not limited to a specific type of plasma reactor. Examples of different types of prior art plasma reactors for gas conversion are for example disclosed by Bogaerts and Centi in "Plasma technology for CO2 conversion: A personal perspective on prospects and gaps." Front. Energy Res., 8, 111 (2020).

The plasma reactors according to the present disclosure are also named atmospheric pressure plasma reactors as they typically operate in a pressure range between a few mbar to one bar and above. In its simplest form, a gas discharge plasma is created by applying an electric potential difference between two electrodes, positioned in a gas, further named feed gas. The potential difference can in principle be direct current (DC), alternating current (AC), ranging from 50 Hz over kHz to MHz (radio-frequency; RF), or pulsed. In addition, the electrical energy can also be supplied in other ways, e.g., by a coil (inductively coupled plasma; ICP) or as microwaves (MW). Embodiments of different types of plasma reactors according to the present disclosure are further discussed below in more detail.

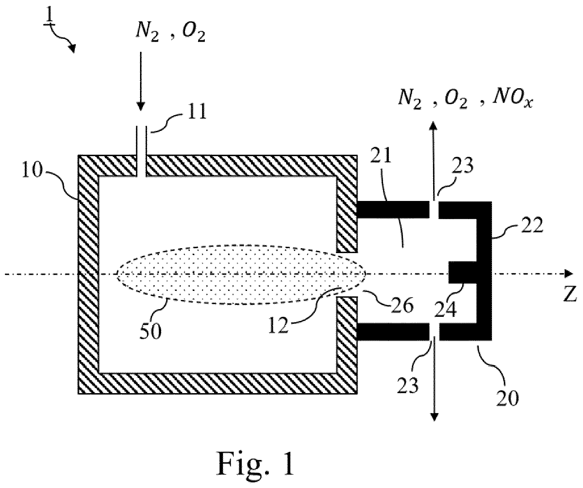

What the various types of plasma reactors 1 for gas conversion have in common is that they comprise a plasma chamber 10 wherein, when the plasma reactor 1 is in operation, a plasma 50 is formed, as schematically illustrated on Fig.1.

Typically, the plasma chamber 10 of the plasma reactor 1 comprises one or more gas inlets 11 configured for introducing a feed gas into the plasma chamber 10, and at least one gas outlet opening 12 for evacuating converted and unconverted feed gas from the plasma chamber 10. The black arrows on Fig.1 indicate a direction of inflow and outflow of the feed gas. Remark that not all components of the plasma reactor for gas conversion are shown on Fig.1, for example the electrical power means for generating the plasma is not shown, and these components are further discussed below when detailed embodiments of various types of plasma reactors are discussed.

The plasma reactor 1 comprises a central axis Z passing through the gas outlet opening 12 plasma chamber 10, as illustrated on Fig.1. The gas outlet opening has to be construed as an orifice. The wording passing through has to be construed as crossing or traversing. In embodiments wherein the gas outlet opening 12 has a circular shape, typically, the central axis Z is centrally passing through the gas outlet opening.

In embodiments, the gas outlet opening 12 of the plasma chamber comprises an outlet surface that is transverse or orthogonal with respect to the central axis Z.

The plasma reactor according to the present disclosure is characterized in that it comprises an effusion nozzle 20 that is coupled to the plasma chamber 10, as schematically illustrated on Fig.1. The effusion nozzle 20 comprises a gas-receiving cavity 21 extending along the central axis Z of the plasma chamber from a first end to a second end.

The gas-receiving cavity is configured for receiving a gas flow of converted and unconverted feed gas exiting through the at least one gas outlet opening 12 of the plasma chamber. For instance, the gas-receiving cavity 21 comprises an axial entrance opening 26 at the first end that is configured for receiving this gas flow of converted and unconverted feed gas exiting the plasma chamber. An axial entrance opening 26 has to be construed as an opening that is transverse with respect to the central axis Z.

In embodiments, the axial entrance opening of the effusion nozzle comprises an entrance surface that is transverse or orthogonal with respect to the central axis Z.

The gas-receiving cavity 21 further comprises an axial blocking member 22 at the second end of the gas-receiving cavity. The axial blocking member 22 is configured for blocking the gas flow of converted and unconverted feed gas exiting the plasma chamber 10 and for forcing the received converted and unconverted feed gas to recirculate within the gas-receiving cavity 21.

Blocking a gas flow by the axial blocking member 22 has to be construed as prohibiting the gas flow to proceed flowing in its forward direction along the central axis Z and hence the axial blocking member 22 forces the gas flow to change its flow direction, i.e. rerouting the gas flow.

In embodiments, the axial blocking member is an axial wall or an axial blind flange that is transverse with respect to the central axis Z.

Typically, the overall direction of the gas flow exiting the plasma chamber and entering the gas-receiving cavity of the effusion nozzle is in a direction parallel with central axis Z.

In other words, the effusion nozzle assures that the gas flow out of the plasma chamber is blocked in its forward direction as gas molecules bounce against the blocking member 22. In this way, the gas molecules start to recirculate within the gas-receiving cavity 21.

When using the effusion nozzle, for a same gas flow rate of feed gas, the pressure inside the plasma chamber will generally increase and the time the feed gas stays in the reactor before being evacuated is increased, thereby increasing the production yield.

Further, the recirculation of the gas in the receiving-cavity contributes to improve the heat transfer to the walls of the effusion nozzle and an increased temperature can positively influence the production yield as further outlined below.

Indeed, with the effusion nozzle according to the present disclosure, heat escaping from the reactor is reduced and the effusion nozzle retains some of the heat from the plasma. The turbulent mixing allows for a better heat transfer to the walls compared to for example a laminar flow because with turbulent flow a better mixing is obtained. A laminar flow tends to shield the heat more.

The production yield can be further increased due to an effect known as "wall-stabilization" of the plasma, where the temperature gradient of the plasma column becomes less steep as the heat transfer towards the walls increases. This leads to a more stable, less contracted plasma column (or arc), which improves the conversion.

In embodiments, the blocking member 22 comprises a protruding element 24 protruding inside the gas-receiving cavity 21 in a direction parallel with the central axis Z. The axially protruding element 24 separates the gas flow, i.e. the gas flow is forced to flow around the protruding element 24 and hence the protruding element could further contribute to forcing the recirculation of the gas inside the gas-receiving cavity. Detailed embodiments of the protruding element will be discussed below in more detail.

The effusion nozzle 20 further comprises one or more effusion openings 23, such as for example effusion holes or effusion slits, for evacuating converted and unconverted feed gas from the gas-receiving cavity 21.

The coupling of the effusion nozzle to the plasma chamber can be performed by various coupling means, known to the skilled person, such as but not limited to welding, soldering or screwing. The coupling is made in such a way that no gas or only an insignificant amount of gas could escape through the coupling interface.

### Examples of effusion nozzles

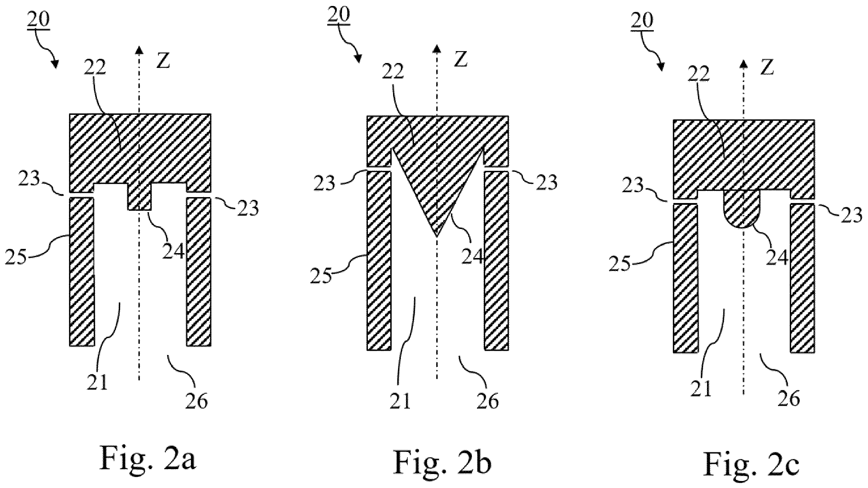

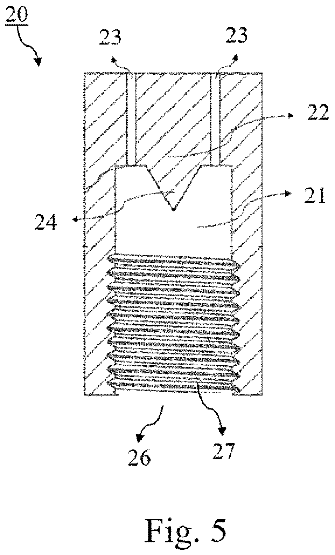

In Fig.2a to Fig.2f and Fig.3 to Fig.5, examples of embodiments of an effusion nozzle according to the present disclosure are schematically shown. As illustrated on these embodiments, the gas-receiving cavity 21 is extending along the central axis Z from an axial entrance opening 26 at a first end of the gas-receiving cavity to the axial blocking member 22 at a second end of the gas-receiving cavity, opposite the first end. The gas-receiving cavity 21 receives the gas flow of converted and unconverted feed gas through the axial entrance opening 26.

In embodiments, the effusion nozzle can be manufactured as a single piece, e.g. mechanically manufactured as a single metal piece that is attachable to the plasma chamber.

In other embodiments the effusion nozzle can be composed of multiple pieces or sections that are attached to each other. In embodiments, the effusion nozzle is for example composed of two pieces that are attached to each other. For example, a first separate section of the effusion nozzle can be formed by a circumferential wall 25 radially delimiting the gas-receiving cavity 21 and a second separate section can be formed by an axial flange or an axial blocking wall forming the axial blocking member 22. The second section can then be attached to the first section by welding, screwing or any other suitable coupling means such that no or only an insignificant amount of gas could escape through the coupling interface.

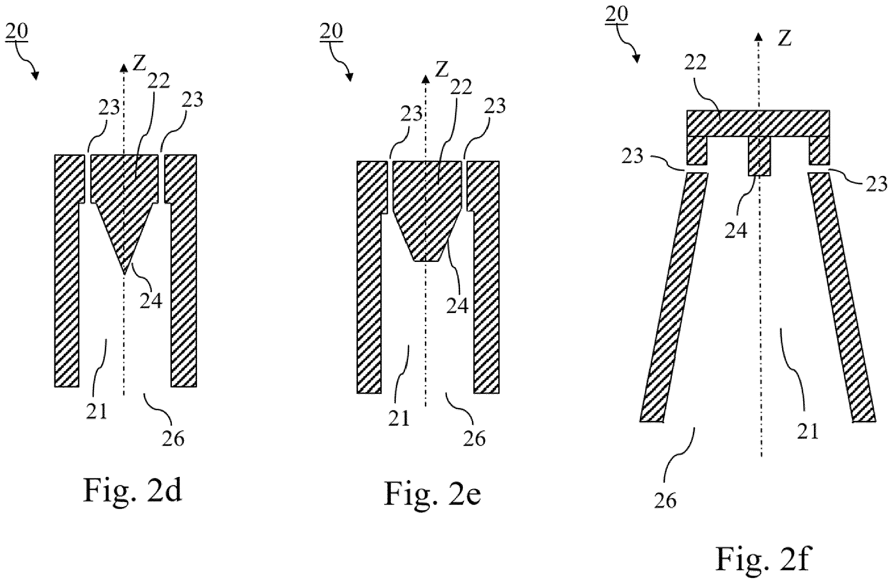

In embodiments as illustrated on Fig.2a to Fig.2e, at least a portion of the gas-receiving cavity 21 is radially delimited by a cylindrical inner wall. In other embodiments, as shown on Fig.2f, at least a portion of the gas-receiving cavity 21 is radially delimited by a conical wall. Preferably, the cylindrical or conical portion of the gas-receiving cavity is axial symmetric with respect the central axis Z.

In embodiments, the gas outlet opening 12 of the plasma chamber is circular and at least a portion of the gas-receiving cavity 21 of the effusion nozzle has a tubular shape having an inner diameter matching with a diameter of the circular gas outlet opening of the plasma chamber.

For example, in embodiments, an inner tubular portion of the gas-receiving cavity 21 can have a length along the central axis in a range between 15 to 40 mm and have an inner diameter in a range between 10 to 20 mm and wherein this inner diameter is matching with a diameter of the gas outlet opening of the plasma chamber. In other embodiments, depending on the dimensions and type of plasma reactor, the dimensions of the gas-receiving cavity can vary and be scaled up or down.

In further embodiments wherein the gas outlet opening 12 of the plasma chamber is circular, at least a portion of the gas-receiving cavity 21 of the effusion nozzle has a shape of a truncated cone wherein a diameter of a side, e.g. a top side, of the truncated cone is matching with a diameter of the gas outlet opening of the plasma chamber.

The shape of the gas-receiving cavity is however not limited to a cylindrical or conical shape. In other embodiments the gas-receiving cavity is radially delimited by a circumferential wall having any compatible shape. For example the inner shape of the gas-receiving cavity can also have the shape of a cuboid or at least a portion of the gas-receiving cavity can have the shape of a cuboid.

In the embodiments shown on Fig.2a to Fig.2f, the axial blocking member 22 comprises a protruding element 24 protruding inside the gas-receiving cavity 21 in a direction parallel with the central axis Z. Due to the protruding element 24, the gas flow cannot further flow centrally along the central axis and hence the gas flow is forced to separate and flow around the protruding element. Hence the protruding element can further enhance the recirculation of the gas within the gas-receiving cavity.

In embodiments, the protruding element is rotationally symmetric with respect to the central axis Z.

This protruding element can have the shape of any of: a cone, a cylinder, a hemisphere, a cuboid, a frustum, a pyramid, a prism, a cross, a helix shape, or any combination thereof. A protruding element having a shape of a cuboid, a pyramid, a hemisphere and a frustum is respectively illustrated on Fig.2a, Fig.2b, Fig.2c and Fig.2e.

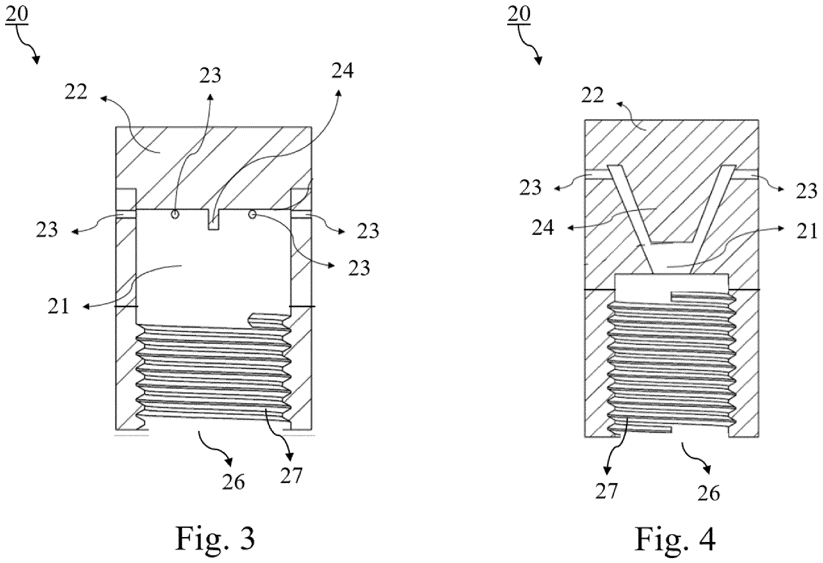

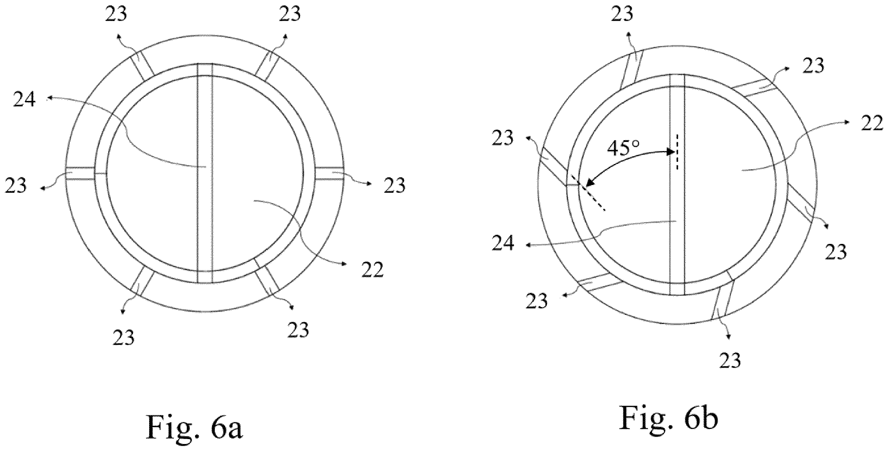

The protruding element of the embodiment shown on Fig.3 and Fig.6a has the shape of a bar, which is an example of a cuboid, and in this embodiment, the protruding element is forming a separation wall separating the end portion of the gas-receiving cavity into two halves.

In embodiments wherein, the axial blocking member 22 comprises a protruding element 24, the axial blocking member 22 is manufactured out of single piece. In other embodiments, the axial blocking member is made out of two parts: an axial blind flange and the protruding element. The protruding element can be mechanically attached to the axial blind flange by welding, soldering or any suitable attachment means.

The number of effusion openings 23 in the effusion nozzle can vary from embodiment to embodiment. Typically, the effusion nozzle 20 comprises between 1 and 100 effusion openings, but the number of effusion openings can also be larger.

In embodiments wherein the effusion nozzle comprises a plurality of effusion openings, the effusion nozzle comprises 2 or more effusion openings, preferably 4 or more effusion openings or more preferably 6 or more effusion openings. Advantageously by providing multiple effusion openings, the temperature of the walls of the effusion nozzle resulting from the heat transfer of the recirculating gas, as discussed above, is more evenly distributed and hot temperature spots on for example one side or one particular area of the effusion nozzle can be avoided.

In embodiments comprising a plurality of effusion openings, the effusion openings are radially distributed. The cross-sectional view shown on Fig.6a and Fig.6b are examples of embodiments of an effusion nozzle comprising six effusion openings 23 radially distributed.

In further embodiments, the effusion openings of the effusion nozzle are randomly distributed. In other embodiments, the effusion openings are distributed within a band of a radial circumferential wall of the effusion nozzle.

In embodiments, as shown on Fig.2a, Fig.2b and Fig.6a, the effusion openings 23 are through-holes traversing through a radial circumferential wall 25 of the effusion nozzle. In these embodiments, the effusion openings are holes that have a central hole axis perpendicular to the central axis Z of the plasma reactor.

However, in other embodiments the angle between the central hole axis of the effusion hole and the central axis Z can be different from 90° and this angle can have a value in a range between 0° and 90°. For example, an effusion hole having a central hole axis at 45° with respect to the central axis Z is shown in Fig.6b.

In other embodiments, the effusion holes may be oriented tangentially with respect to the nozzle boundary.

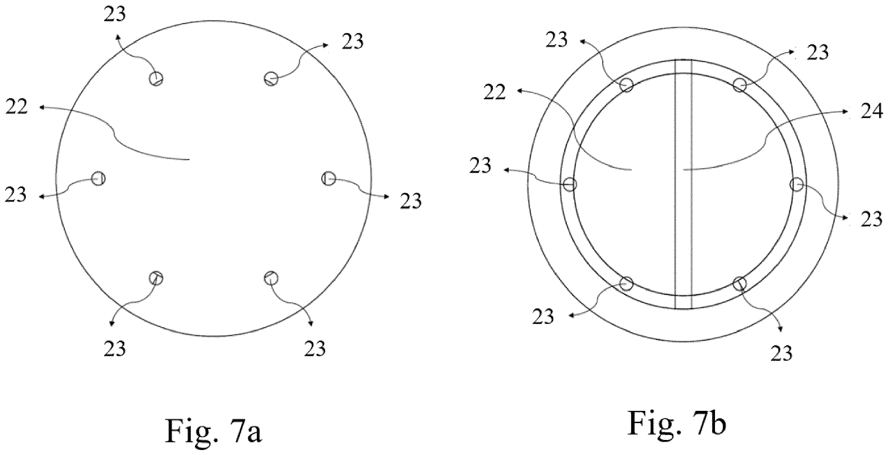

In other embodiments as illustrated in Fig.2d, Fig.2e, Fig.7a and Fig.7b, the effusion holes are axial holes made through the axial blocking member 22. In the example shown on Fig.7a and Fig.7b, illustrating, respectively an outer side and inner side of an axial blocking member 22, six axial holes are radially distributed.

The number and dimensions of the effusion openings 23 are generally defined in relation to the overall dimensions and parameters of the plasma reactor. Effusion openings can for example have a diameter between 0.1 and 10 mm. The number of openings 23 (and their specific dimensions) depend on the reactor dimensions, flow rate, power and type of gas used.

The effusion openings are not necessarily holes, and the holes do not necessarily have a circular opening. The opening of the hole can have any suitable shape.

In embodiments, the effusion opening is a slit, i.e. having the shape of a rectangle.

In embodiments, the effusion openings 23 are configured such that when the plasma reactor 1 is in operation, for a given constant supply rate of the feed gas: 1 ≤ P1/P_{ref} ≤ 5, wherein P1 is the pressure measured inside the plasma chamber and P_{ref} is a reference pressure corresponding to a pressure obtained in the plasma chamber for the same constant supply rate of feed gas but with the effusion nozzle removed from the plasma chamber. In other words, the pressure effect of using an effusion nozzle is either no effect, i.e. the same pressure is maintained or there is an overpressure created in the plasma chamber. More preferably, the pressure ratio is in the range: 1 ≤ P1/P_{ref} ≤ 3.

In embodiments, the effusion openings 23 are configured such that when the plasma reactor is in operation, the pressure inside the plasma chamber is between 1 mbar and 5 bar, preferably between 100 mbar and 5 bar, more preferably between 500 mbar and 2 bar.

In embodiments, the plasma chamber comprises a tubular outlet extension extending the gas outlet opening 12 of the plasma chamber along the central axis Z, and wherein the tubular outlet extension has an outer thread. In these embodiments, a circumferential inner wall portion of the gas-receiving cavity 21 of the effusion nozzle 20 comprises an inner thread 27 matching with the outer thread of the tubular outlet extension of the plasma chamber so as to form a screwed coupling between the effusion nozzle 20 and the plasma chamber 10. This allows to easily remove the effusion nozzle from the plasma chamber and to replace the effusion nozzle with another effusion nozzle.

Example of embodiments of effusion nozzles wherein a circumferential inner wall portion of the gas-receiving cavity comprises a thread 27 are shown in Fig.3 to Fig.5. The thread of the effusion nozzle is for example a female thread that matches a male thread of a tubular outlet extension of the plasma chamber.

In other embodiments, the effusion nozzle is welded to the plasma chamber.

The effusion nozzles are preferably made of a metal, e.g. stainless steel.

In embodiments, the effusion nozzle is made of an electrically conducting material and the effusion nozzle is forming part of an electrode of the plasma reactor. In other embodiments, the effusion nozzle is forming an electrode of the plasma reactor.

In other embodiments, depending on the type of plasma reactor used, the effusion nozzle is electrically insulated from the plasma chamber by an insulator, e.g. a ceramic or otherwise non-conductive insulator.

In embodiments , the effusion nozzle is partly made of an electrically conductive material and partly made of an electrically non-conductive material, i.e. an insulator. For example, in embodiments, the protruding element can be made of an electrically conductive material and the other parts of the effusion nozzle can be made of an electrically non-conductive material such as for example a ceramic. In these embodiments wherein the protruding element is made of an electrically conductive material, the protruding element is electrically connected with the anode.

### Gliding arc plasma reactors

A number of different types of plasma reactors for gas-conversion that are operable with an effusion nozzle according to the present disclosure will be discussed in more detail.

A first type of plasma reactor comprising an effusion nozzle is a gliding arc, GA, plasma reactor. The GA discharge is a transient type of arc discharge. A distinction can be made between a two-dimensional, 2D, GA and a three-dimensional, 3D, GA plasma reactor.

What these GA plasma reactors have in common is that they comprise a first electrode, a second electrode electrically insulated of the first electrode, and a power supply configured for maintaining a high-voltage between the first and second electrode. The high-voltage is typically in the kV range.

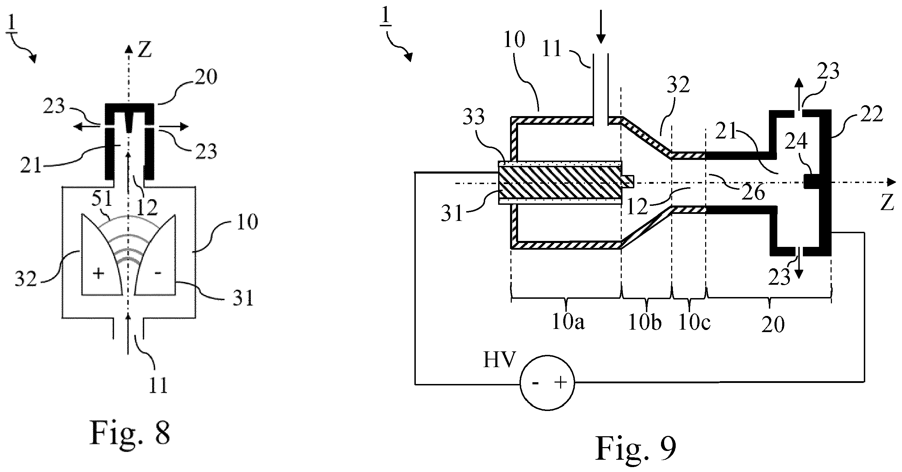

In a classical 2D GA plasma reactor, as illustrated on Fig.8, a discharge arc 51 is formed between two flat diverging electrodes 31,32. The arc is initiated at the shortest interelectrode distance, and under influence of a gas blast, which flows along the electrodes, the arc 51 "glides" towards larger interelectrode distance, until it extinguishes and a new arc is created at the shortest interelectrode distance. As illustrated in Fig.8, an effusion nozzle 20, coloured in black on Fig.8, is coupled to the plasma chamber 10 of the 2D GA reactor and converted and unconverted gas can flow from the plasma chamber 10 to the gas-receiving cavity 21 of the effusion nozzle. The arrows illustrate the gas flow through the reactor: the feed gas enters through the gas inlet 11 of the plasma chamber 10 and the gas leaves the plasma chamber through the outlet opening 12 in order to enter the gas-receiving cavity of the effusion nozzle 20. The converted and unconverted feed gas finally leaves the effusion nozzle 20 through the effusion openings 23.

Examples of a 3D GA discharge plasma reactor are a 3D gliding arc plasmatron, GAP, and a rotating gliding arc, RGA, reactor. Both types of reactors operate between cylindrical electrodes.

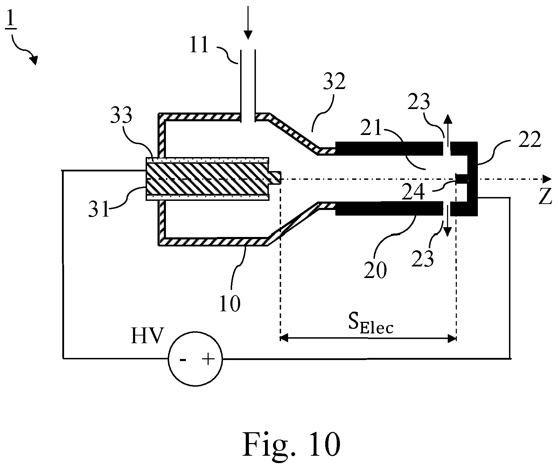

With reference to Fig.9 and Fig.10, a cross-section of two examples of a 3D RGA reactor comprising an effusion nozzle 20 are schematically shown. The RGA reactor comprises a plasma chamber 10 and one or more gas inlets 11 for supplying the feed gas into the plasma chamber. Generally, the feed gas is supplied in the plasma chamber as a swirling flow around the central axis Z. The RGA reactor further comprises a pair of electrodes wherein a first electrode 31 is a high-voltage cathode and a second electrode 32 is a grounded anode. In this embodiment, the first electrode has shape of a pin elongating along the central axis Z, the high-voltage is for example provided in the form of a high-voltage spark plug.

In embodiments, the second electrode (or anode) of a 3D RGA is at least partly formed by a first wall portion of the plasma chamber. Through this first wall portion, a wall opening is made forming the gas outlet opening 12 of the plasma chamber 10.

In embodiments, the first wall portion of the plasma chamber that at least partly is forming the second electrode is a conical portion having a shape of a truncated hollow cone elongating along the central axis Z.

Generally, the effusion nozzle 20 is made of an electrically conducting material and the effusion nozzle is electrically coupled to the second electrode so as to form an extension of the second electrode 32.

For example, in the embodiments shown on Fig.9 and Fig.10, the anode 32 is formed by multiple wall portions of the plasma chamber 10. In this example the plasma chamber 10 is made of a metal and comprises a first cylindrical first section 10a followed by a second conical section 10b and finally followed by a tubular section 10c. The feed gas, e.g. N₂ and O₂, is introduced in the first cylindrical section 10a of the plasma chamber 10 as a swirling gas flow with respect to the central axis Z.

In the embodiment shown on Fig.9 and Fig.10, the effusion nozzle 20, colored in black, is attached to the tubular section 10c of the plasma chamber. As illustrated on Fig.9, the tubular section 10c is a tubular outlet extension extending the outlet opening 12 of the plasma chamber along the central axis Z. In this embodiment, the effusion nozzle is also made of an electrically conducting material such as for example stainless steel. Hence, in this embodiment, the effusion nozzle, together with the first 10a, second 10b and third section 10c of the plasma chamber are forming the anode 32. The anode is generally grounded.

As with the 2D GA reactor, also with the 3D GA reactor, by applying a high-voltage between the first 31 and second electrode 32, a gliding arc discharge is generated in the plasma chamber. Typically, when applying a voltage of about 3 kV between the first and second electrode, an arc is created in the shortest gap between cathode and anode. In an RGA plasma reactor, the arc immediately starts gliding along the reactor body due to the swirling gas flow inside the plasma chamber. During gliding, one side of the arc remains attached to the top face of the cathode, while the other side glides around the surface of the reactor body, which results in an arc elongation. While the arc is gliding, it also rotates around the internal surface of the anode. When powered by a current source, the elongation of the arc is represented by a nearly linear increase in the discharge voltage. The discharge current decreases due to the rising arc length, and thus rising arc resistance. During arc elongation, energy is dissipated into heat and radiation. Therefore, if the supplied power is not sufficient to sustain further arc extension, the arc will extinguish, which is presented by a sudden drop of the discharge current, and a reciprocal jump in the electrode voltage. As a result, re-ignition will take place in the shortest gap between both electrodes. This is the common iterative operating mode of the reactor.

In embodiments, the plasma reactor is a rotating gliding arc plasma reactor operable both in a rotating arc mode, as discussed above, and operable in a steady arc mode. A rotating arc mode is a mode wherein the arc rotates along the anode , while in the steady arc mode, the arc is more fixed and has a constant length. These two modes of operation are for example discussed by Jardali et al.

Indeed, with an RGA reactor, if certain conditions are met, the arc can stabilize due to the intense heat transfer to the walls of the plasma chamber. In this so-called steady arc regime, the supplied power is high enough for the arc to elongate through the third section 10c of the plasma chamber and reach the entrance opening of the effusion nozzle 20. At this high power level, the arc does not extinguish, and remains relatively stable in the centre of the plasma chamber with a constant arc length. This steady state arc regime is reflected by the relatively constant values for discharge voltage and current. When in the steady arc regime, the effusion nozzle further allows the plasma to elongate until it reaches the blocking member 22 or more precisely the protruding element 24 of the blocking member 22.

For an RGA reactor operating in the steady arc regime, for a given gas flow rate of introducing the feed gas into the plasma chamber and for a given power supplied by the power supply, the electrode separation distance S_{Elec} measured along the central axis Z between a tip of the first electrode 31 and a tip of the blocking member 24 of the effusion nozzle is defined such that, when in operation, the steady arc discharge is anchored between the tip of the first electrode 31 and the tip of the blocking member 24 of the effusion nozzle. In this way, the plasma is extending through the effusion nozzle up to the blocking member. Such a plasma extension increases the production yield of the gas conversion.

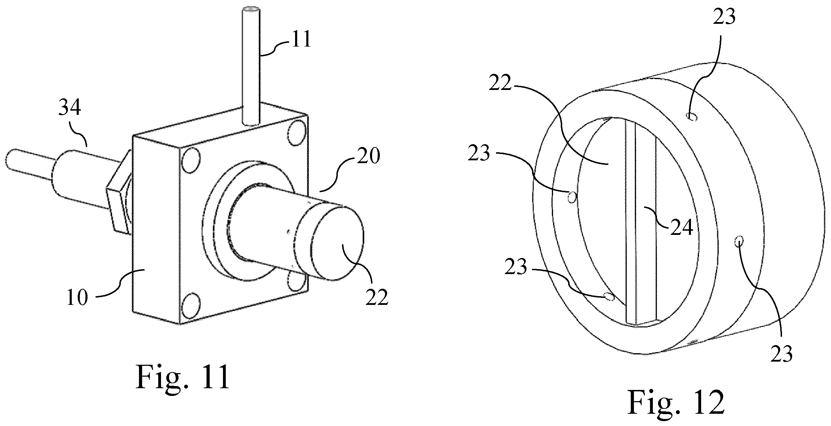

With reference to Fig.11, an isometric view is shown of an exemplary embodiment of an RGA plasma reactor according to the present disclosure. The cuboid shaped element is the reactor outer body forming a supporting structure. In this embodiment, the effusion nozzle is cylindrically shaped. Further, a spark plug 34 is shown for powering the cathode pin-electrode. Fig.12 illustrates part of the inside of the effusion nozzle of Fig.11, namely the gas-receiving cavity ending with a blocking member 22 comprising a protruding element 24. In this example, the protruding element 24 has a shape of a cuboid, more specifically a shape of a bar, and divides an end portion of gas-receiving cavity into two halves.

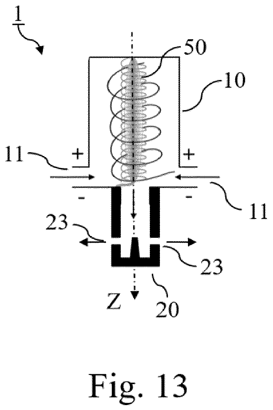

Another example of a 3D gliding arc reactor is a gliding arc plasmatron. An example of an embodiment of a GAP reactor is schematically illustrated in Fig.13. The cylindrical reactor body forming the reaction chamber 10 operates as a cathode, i.e. a powered electrode, while the reactor outlet acts as an anode and is grounded. The gas enters tangentially between both cylindrical electrodes via gas inlets 11. The spiral shown inside the plasma chamber in Fig.13, illustrates a spiralling or vortex gas flow. When the outlet diameter of the plasma chamber is significantly smaller than the inner diameter of the plasma chamber, the gas flows in an outer vortex towards the upper part of the plasma chamber, and subsequently it will flow back in a reverse inner vortex with smaller diameter, because it has lost some speed, and thus it can leave the reactor through the gas outlet opening of the plasma chamber to finally reach the gas-receiving cavity of the effusion nozzle 20. The converted and unconverted feed gas leaves the gas-receiving cavity through the effusion openings, in this example radial effusion openings 23.

As is the case with the RGA, also with the GAP reactor, following extinction of the arc, the arc is again initiated at the shortest interelectrode distance, and expands till the upper part of the plasma chamber, rotating around the central axis Z of the reactor until it more or less stabilizes in the center after about 1 ms. In the ideal scenario, the inner gas vortex passes through this stabilized arc, allowing a larger fraction of the gas being converted than in a classical two-dimensional GA discharge.

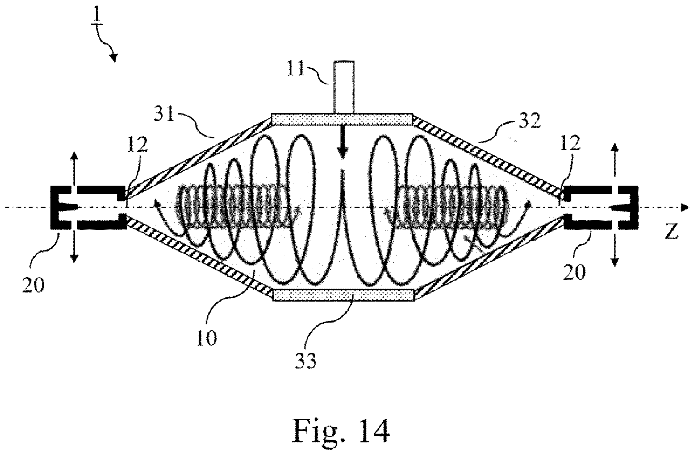

A further example of a 3D GA plasma reactor is a so-called dual vortex plasmatron, DVP, as schematically illustrated on Fig.14. It presents an innovative electrode design, to improve the conversion capability of the GAP reactor, by elongating the arc in two directions, to increase the residence time of the gas inside the arc, and to actively cool the cathode spot by rotation of the arc and gas convection. This DVP yields a strong rotational gas flow, up to the electrode outlets, which allows rotating the cathode or anode hot spots, hence reducing electrode damage. As the plasma chamber 10 of this embodiment comprises two gas outlet openings 12, two effusion nozzles 20 are coupled to the plasma chamber, one to each gas outlet opening 12. In this embodiment, the first 31 and second 32 electrode are wall portions of the plasma chamber that are electrically separated by an electrical insulator 33.

### Microwave plasma reactors

A second type of plasma reactor comprising an effusion nozzle according to the present disclosure is a microwave, MW, plasma reactor wherein the plasma is created by applying microwaves, i.e., electromagnetic radiation with a frequency between 300 MHz and 10 GHz, to a gas, without using electrodes. There are different types of MW plasmas, such as cavity induced plasmas, free expanding atmospheric plasma torches, electron cyclotron resonance plasmas and surface wave discharges.

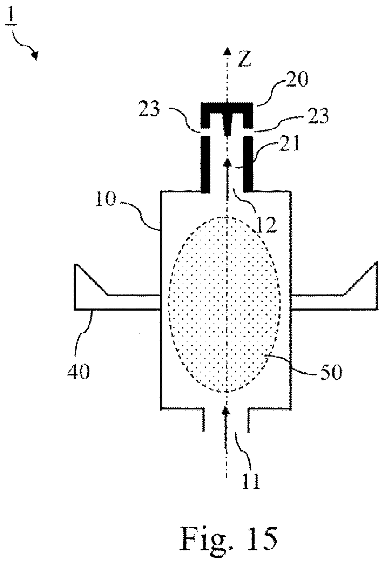

An example of an embodiment of a MW plasma reactor comprising an effusion nozzle is shown in Fig.15. The plasma chamber 10 is formed by a quartz tube having a gas inlet 11 and the gas flows through the quartz tube. The quartz tube is transparent to MW radiation and is intersecting with a rectangular waveguide 40. Microwave power transferred to the plasma chamber initiates plasma 50 within the plasma chamber 10. The microwaves propagate along the interface between the quartz tube and the plasma column, and the wave energy is absorbed by the plasma. The effusion nozzle 20 is coupled with the plasma chamber 10 and the gas-receiving cavity 21 of the effusion nozzle 20 receives the converted and unconverted feed gas through the gas outlet 12 of the quartz tube. Finally, the converted and unconverted feed gas can escape through the effusion openings 23 of the effusion nozzle.

### Atmospheric pressure glow discharge reactors

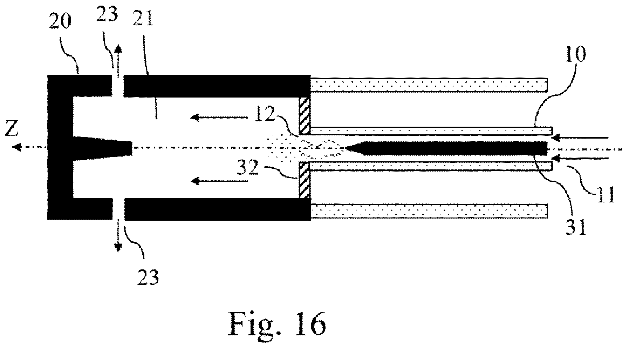

A third type of plasma reactors that comprise an effusion nozzle according to the present disclosure are so-called atmospheric pressure glow discharges, APGD, reactors. A basic APGD reactor is schematically illustrated in Fig.16. The reactor comprises a pin-type cathode 31 extending along the central axis Z and an axial plate having a hole is forming the anode 32. A quartz tube is forming the plasma chamber 10. The converted and unconverted gas flows out of the plasma chamber 10 into the gas-receiving cavity 21 of the effusion nozzle 20. The converted and unconverted feed gas finally leaves the plasma reactor through the effusion openings 23 in the effusion nozzle.

In embodiments, the APGD reactor additionally uses a vortex flow generator. Such a vortex flow effectively lowers the cathode temperature due to turbulence, and thus enables operation at higher power with longer interelectrode distance. In addition, the turbulence allows somewhat more gas to pass through the plasma.

In embodiments, to further enhance the gas fraction passing through the plasma, APGD reactors make use of a ceramic tube with a smaller inner radius of 2.5 mm that fits within a few mm around the cathode pin. In these embodiments, a spiral groove is carved on the pin, guiding the gas into the tube, and acting as effective cooling for the cathode pin, preventing it from melting, and thus also enabling the use of higher power. The plasma region is indeed limited to a radius of 2.5 mm or less, as predicted by modelling, so this ceramic tube with small inner radius makes sure that the plasma fills the entire reactor, and all the gas passes through the active plasma, yielding improved gas conversion.

### Performance of plasma reactor with effusion nozzle

The present invention is, at least in part, based on the inventor's observation and insight that an effusion nozzle as specified above, can improve the performances of a plasma reactor for plasma-based gas conversion. More precisely, that the effusion nozzle can increase the production yield of gas conversion and/or reduce the energy cost when compared to prior art plasma reactors not comprising an effusion nozzle.

Tests have been performed to demonstrate improved performances of conversion of N₂ and O₂ molecules into NO and NO₂ molecules. The tests were performed with the rotating gliding arc plasma reactor illustrated on Fig.11 and Fig.12. The RGA plasma reactor was operated in the steady arc regime discussed above.

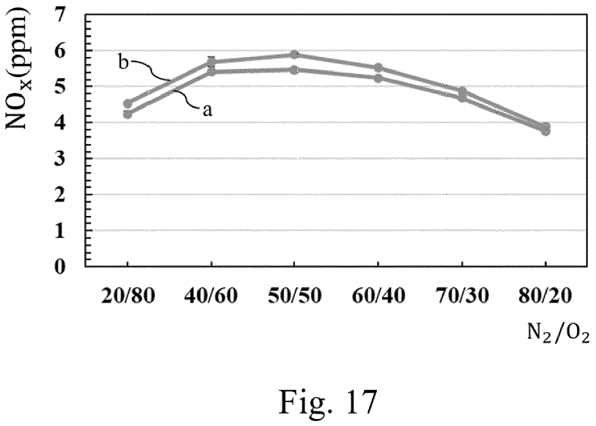

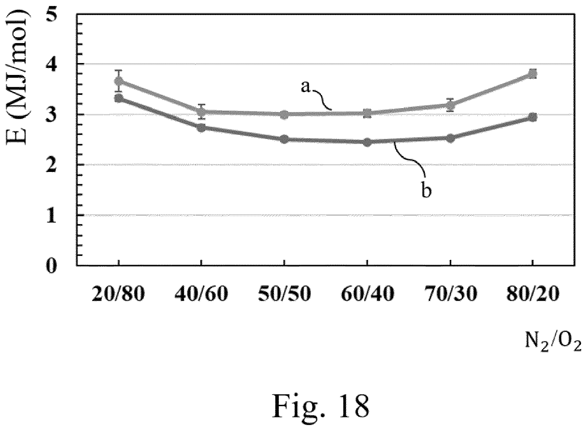

The tests were performed in a wide range of N₂/O₂ gas feed ratios supplied to the RGA plasma reactor, with and without the effusion nozzle. Figure 17 shows the measured NOₓ concentrations expressed in parts per million, ppm, as function of the N₂/O₂ ratio. Curve a is for a measurement without effusion nozzle and curve b is for a measurement with effusion nozzle. In Fig.18, the corresponding energy cost E, expressed as MJ per mol, is plotted as function of the N₂/O₂ ratio. The definition of the energy cost, which is expressing an energy consumption, can be found in Jardali et al..

According to the results, with the same obtained NOₓ concentrations or even improved concentrations, as shown on Fig.17, the energy cost is clearly reduced, for instance, with about 23% at a N₂/O₂ ratio of 80/20, which is a remarkable improvement.

Further tests have been performed to measure the temperature of the effusion nozzle during operation of the RGA plasma reactor. Results show that the end portion of the effusion nozzle, i.e. the axial blocking member, heats up to temperatures of 500°C and above. These high temperatures improve the thermal conversion and therefore higher production yields can be obtained at lower input power.

Hence, a further aspect of the present disclosure provides for using a plasma reactor as described above that comprises an effusion nozzle for conversion of N₂ and O₂ molecules into NO and NO₂ molecules. In embodiments, an RGA plasma reactor is used for this conversion of N₂ and O₂ molecules.

Further embodiments, provide for using a plasma reactor as described above that comprises an effusion nozzle for conversion of CO₂ molecules into value added chemicals, or renewable fuels. In embodiments, an RGA plasma reactor is used for this conversion of CO₂ molecules.

**Reference numbers**

| | |
|---|---|
| 1 | Plasma reactor |
| 10 | Plasma chamber |
| 11 | Gas inlet |
| 12 | Gas outlet opening |
| 20 | Effusion nozzle |
| 21 | Gas-receiving cavity |
| 22 | Axial blocking member |
| 23 | Effusion opening |
| 24 | Protruding element |
| 25 | Radial circumferential wall |
| 26 | Axial entrance opening |
| 27 | Thread |
| 31 | First electrode |
| 32 | Second electrode |
| 33 | Electrical insulator |
| 34 | Spark plug |
| 40 | Waveguide |
| 50 | Plasma |
| 51 | Arc |

## Claims

1. A plasma reactor (1) for plasma-based gas conversion comprising:
• a plasma chamber (10) having one or more gas inlets (11) configured for introducing a feed gas into the plasma chamber (10), and at least one gas outlet opening (12) for evacuating converted and unconverted feed gas from the plasma chamber (10),
• a central axis (Z) passing through said at least one gas outlet opening (12),
**characterized in that** the plasma reactor (1) comprises
• an effusion nozzle (20) coupled to the plasma chamber (10), and wherein said effusion nozzle (20) comprises:
a) a gas-receiving cavity (21) elongating along said central axis (Z) from a first end to a second end and configured for receiving a gas flow of converted and unconverted feed gas exiting said at least one gas outlet opening (12) of the plasma chamber, and wherein said gas-receiving cavity comprises:
- an axial entrance opening (26) at the first end of the gas-receiving cavity for receiving said gas flow of converted and unconverted feed gas from the plasma chamber, and
- an axial blocking member (22) at the second end of the gas-receiving cavity and wherein the axial blocking member (22) is configured for blocking said gas flow of converted and unconverted feed gas and for forcing the converted and unconverted feed gas to recirculate within the gas-receiving cavity (21),
b) one or more effusion openings (23) configured for evacuating converted and unconverted feed gas from the gas-receiving cavity (21).

2. The plasma reactor according to claim 1 wherein the axial blocking member (22) comprises a protruding element (24) protruding inside the gas-receiving cavity (21) in a direction parallel with the central axis (Z).

3. The plasma reactor according to claim 2 wherein said protruding element (24) has the shape of any of: a cone, a cylinder, a hemisphere, a cuboid, a frustum, a pyramid, a prism, a cross, a helix shape, or any combination thereof.

4. The plasma reactor according to any of previous claims wherein the effusion nozzle (15) comprises a radial circumferential wall (25) and wherein said effusion openings (23) are through-holes traversing said radial circumferential wall.

5. The plasma reactor according to any of previous claims wherein the effusion nozzle comprises 2 or more effusion openings, preferably 4 or more effusion openings, more preferably 6 or more effusion openings.

6. The plasma reactor according to any of previous claims wherein the plasma chamber (10) comprises a tubular outlet extension (10c) extending the at least one gas outlet opening (12) along said central axis (Z), and wherein said tubular outlet extension has an outer thread and wherein a circumferential inner wall portion of the gas-receiving cavity (21) of the effusion nozzle (20) comprises an inner thread matching with the outer thread of said tubular outlet extension (10c) so as to form a screwed coupling between the effusion nozzle (20) and the plasma chamber (10).

7. The plasma reactor of any of previous claims wherein said one or more effusion openings (23) are configured such that when the plasma reactor (1) is in operation, for a given constant supply rate of the feed gas:
1 ≤ P1/Pref ≤ 5, preferably 1 ≤ P1/Pref ≤ 3,
wherein P1 is the pressure inside the reactor cavity and P_{ref} is a reference pressure corresponding to a pressure obtained in the cavity for the same constant supply rate of feed gas but with the effusion nozzle removed from the plasma reactor.

8. The plasma reactor according to any of previous claims wherein said gas outlet opening (12) of the plasma chamber is circular and wherein at least a portion of the gas-receiving cavity (21) of the effusion nozzle has a tubular shape having an inner diameter matching with a diameter of the gas outlet opening of the plasma chamber.

9. The plasma reactor according to any of claims 1 to 7 wherein said gas outlet opening (12) of the plasma chamber is circular and wherein at least a portion of the gas-receiving cavity (21) of the effusion nozzle has a shape of a truncated cone wherein a diameter of a side of the truncated cone is matching with a diameter of the gas outlet opening of the plasma chamber.

10. The plasma reactor of any of claims 1 to 9 comprising:
• a first electrode (31), and
• a second electrode (32) electrically insulated from the first electrode,
and wherein the effusion nozzle (20) is made of an electrically conducting material and the effusion nozzle is electrically coupled to the second electrode so as to form an extension of the second electrode or, alternatively the effusion nozzle or part of the effusion nozzle is forming said second electrode, preferably said first electrode is a high-voltage cathode electrode and said second electrode is a grounded anode electrode.

11. The plasma reactor according to any of claims 1 to 9 comprising:
• a first electrode (31) having a shape of a pin elongating along the central axis (Z),
• a second electrode (32) electrically insulated from the first electrode, and wherein said second electrode is at least partly formed by a first wall portion of the plasma chamber (10), and wherein a wall opening made through said first wall portion is forming said gas outlet opening (12) of the plasma chamber (10),
and wherein the effusion nozzle (20) is made of an electrically conducting material and the effusion nozzle is electrically coupled to the second electrode so as to form an extension of the second electrode, preferably said first electrode is a high-voltage cathode and said second electrode is a grounded anode.

12. The plasma reactor according to claim 2 or 3 comprising:
• a first electrode (31) having a shape of a pin elongating along the central axis (Z),
• a second electrode (32) electrically insulated from the first electrode, and wherein said second electrode is at least partly formed by a first wall portion of the plasma chamber, and wherein a wall opening made through said first wall portion is forming said gas outlet opening (12), and wherein the effusion nozzle (20) is made of an electrically conducting material and the effusion nozzle is electrically coupled to the second electrode so as to form an extension of the second electrode (32),
• a power supply configured for maintaining a high-voltage between the first and second electrode,
and wherein an electrode separation distance (S_{Elec}) measured along the central axis (Z) between a tip of the first electrode (31) and a tip of the protruding element (24) is defined such that when the plasma reactor is in operation and a given power is delivered by the power supply and a given flow rate of feed gas is introduced in the plasma chamber, a steady arc discharge is anchored between the tip of the first electrode and the tip of the protruding element (24).

13. The plasma reactor according to any of claims 11 to 12 wherein said first wall portion of the plasma chamber that at least partly is forming the second electrode is a conical portion having a shape of a truncated hollow cone elongating along the central axis Z.

14. The plasma reactor of any of previous claims wherein the plasma reactor is any of: a 2D gliding arc plasma reactor, a rotating gliding arc plasma reactor, a gliding arc plasmatron, a dual vortex plasmatron, a microwave plasma reactor or an atmospheric pressure glow discharge plasma reactor.

15. Using the plasma reactor according to any of claims 1 to 14 for conversion of N₂ and O₂ molecules into NO and NO₂ molecules, or for conversion of CO₂ molecules into value added chemicals or renewable fuels.
